# EUROPÄISCHE PATENTANMELDUNG

(11) **EP 3 722 376 A1**
(43) Veröffentlichungstag der Anmeldung: **14.10.2020**
(21) Anmeldenummer: 19168021.4
(22) Anmeldetag: 09.04.2019
(51) Int. Cl.: C09D 5/02, C09D 7/63, C09D 7/65

(54) **ADDITIVE ZUR VERBESSERUNG DER OFFENEN ZEIT VON WÄSSRIGEN DISPERSIONSFARBEN UND LACKEN**

(71) Anmelder: Clariant International Ltd, 4132 Muttenz (CH)
(72) Erfinder: RÜGER, Jörg, 63773 Goldbach (DE); KUPFER, Rainer, 65795 Hattersheim (DE); GABEL, Dorothee, 65207 Wiesbaden (DE); PITARCH LOPEZ, Jesus, 60431 Frankfurt am Main (DE)
(74) Vertreter: Mikulecky, Klaus

(57) **Zusammenfassung**

Gegenstand der Erfindung ist die Verwendung von mindestens einer Verbindung der Formel (I) 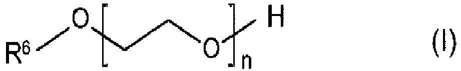 worin
R⁶
für einen C₈- bis C₁₃-Alkylrest, und
n
für eine Zahl von 1 bis 50 stehen,
als Additiv zur Verbesserung der offenen Zeit von wässrigen Beschichtungszusammensetzungen.

## Beschreibung

Gegenstand der vorliegenden Erfindung sind Additive für wässrige Dispersionsfarben und Lacken, die die offene Zeit der Farben und Lacken verlängern.

Die offene Zeit von Farben und Lacken wird als die Zeitspanne definiert, in der Korrekturen in einer frisch aufgetragenen Beschichtung durchgeführt werden können, ohne dass sichtbare Markierungen hinterlassen werden. Es ist wichtig für einen Maler in der Lage zu sein, Defekte an einem applizierten Farbfilm korrigieren zu können, beispielsweise durch das Überpinseln der Fehlstelle, ohne dass dadurch Spuren im trockenen Film entstehen. Je länger der Farbfilm offenbleibt, desto mehr Zeit hat der Maler um die notwendigen Korrekturen zu machen.

Die Trocknung und Filmbildung in wässrigen Farben und Lacken basierend auf Polymerdispersionen läuft bekanntermaßen in 3 Stufen ab. Nach der Auftragung des nassen Farbfilms auf einer Oberfläche verdunstet zunächst das Wasser mit konstanter Rate. Dadurch erhöht sich die Volumenfraktion der dispersen Partikel im Film, so dass die Partikel dichter einander gepackt werden. In der nächsten Stufe deformieren oberhalb der Mindestfilmbildungstemperatur (MFT) die Latexpartikel aufgrund von Kapillarkräften und bilden eine Wabenstruktur, aus der das Wasser diffusionskontrolliert und daher langsamer verdunstet. Im letzten Schritt diffundieren oberhalb der Glasübergangstemperatur die Polymerketten der benachbarten Partikel ineinander unter der Bildung eines Films. Der Übergang zwischen der ersten und zweiten Stufe wird als Ende der offenen Zeit betrachtet und korreliert makroskopisch mit einer Änderung der Filmviskosität von niedrigviskos zu einem hochviskosen Zustand.

Die Zugabe von Additiven in den Rezepturen der Dispersionsfarben und Lacken kann den oben beschriebenen Filmbildungsprozess beeinflussen, so dass eine Verlängerung der offenen Zeit erreicht werden kann.

DE 10333623 lehrt die Verwendung von in Gegenwart von Polyvinylalkohol als Schutzkolloid hergestellten (Meth)acrylatdispersionen zur Verlängerung der offenen Zeit von Beschichtungszusammensetzungen. Allerdings enthalten die in den Beispielen verwendeten Beschichtungszusammensetzungen flüchtige organische Verbindungen wie 1,2-Propylenglykol als Wasserretentionsmittel und organische Lösungsmittel wie Texanol als Koaleszensmittel, die bereits einen großen Einfluss auf Trocknung- und Filmbildungsprozess der wässrigen Beschichtung haben.

Hinsichtlich des anzustrebenden Schutzes von Verbrauchern und Umwelt beim Umgang mit Farben und Lacken, besteht ein Bedarf, eine lange offene Zeit von wässrigen Dispersionsfarben und Lacken zu erreichen, ohne Lösungsmittel und flüchtige Verbindungen zu verwenden.

WO 2011/071510 beschreibt Tristyrylphenolalkoxylate und deren Salze als Additive, die in emissionsfreien oder emissionsarmen Farben eine Verlängerung der offenen Zeit bewirken.

Aufgabe der vorliegenden Erfindung war die Bereitstellung von neuen Additiven, die den Stand der Technik hinsichtlich der Verlängerung der offenen Zeit von wässrigen emissionsfreien und/oder emissionsarmen Dispersionsfarben und Lacken übertreffen.

Überraschenderweise wurde gefunden, dass dies mit aliphatischen Fettalkoholethoxylaten möglich ist.

Gegenstand der Erfindung ist daher die Verwendung von mindestens einer Verbindung der Formel (I) 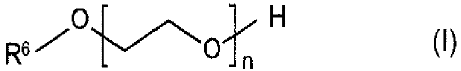 worin
- R⁶: für einen C₈- bis C₁₃-Alkylrest, und
- n: für eine Zahl von 1 bis 50 stehen,

als Additiv zur Verbesserung der offenen Zeit von wässrigen Beschichtungszusammensetzungen.

Ein weiterer Gegenstand der Erfindung ist ein Verfahren zur Verlängerung der offenen Zeit von wässrigen Beschichtungszusammensetzungen, indem der wässrigen Beschichtungszusammensetzung vor dem Auftragen auf ein zu beschichtendes Substrat mindestens eine Verbindung der Formel (I) zugesetzt wird. 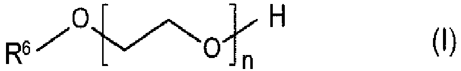 worin
- R⁶: für einen C₈- bis C₁₃-Alkylrest, und
- n: für eine Zahl von 1 bis 50 bedeuten.

In einer bevorzugten Ausführungsform steht R⁶ für einen Rest der Formel (II) 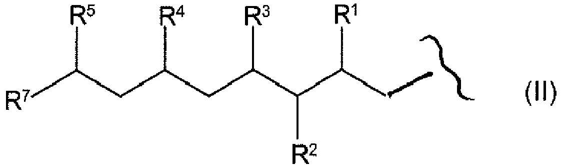 worin
- R¹, R², R³, R⁴ und R⁵: unabhängig voneinander für H oder CH₃, und
- R⁷: für H, oder einen geradkettigen C₁-C₅-Alkylrest
stehen, mit der Maßgabe, dass die Gesamtzahl der Kohlenstoffatome in R¹, R², R³, R⁴, R⁵ und R⁷ zwischen 0 und 5 liegt.

In Formel (II) bezeichnet die Schlangenlinie die Stelle der Bindung an das Sauerstoffatom.

Die Verbindung der Formel (I) ist in einer Ausführungsform ein Fettalkoholethoxylat. Unter einem Fettalkohol wird im Sinne dieser Erfindung ein Alkohol mit einer geradkettigen oder verzweigten Alkylgruppe verstanden.

In einer bevorzugten Ausführungsform der Erfindung enthalten die wässrigen Beschichtungszusammensetzungen mindestens ein Fettalkoholethoxylat gemäß der Formel (I), worin die gesamte Anzahl von Kohlenstoffatomen in R⁶ gleich 11 ist.

In einer weiteren bevorzugten Ausführungsform der Erfindung enthalten die wässrigen Beschichtungszusammensetzungen mindestens ein Fettalkoholethoxylat gemäß der Formel (I), worin R⁶ ein linearer oder verzweigter Alkylrest ist. Vorzugsweise ist R⁶ verzweigt.

Besonders bevorzugt sind Verbindungen gemäß der Formel (I) die das Produkt der Ethoxylierung von verzweigten, primären Alkoholen mit 11 Kohlenstoffatomen sind. In dieser bevorzugten Ausführungsform enthalten die Reste R¹, R², R³, R⁴, R⁵ und R⁷ zusammen 3 Kohlenstoffatome.

Ganz besonders bevorzugt sind Verbindungen gemäß der Formel (I) die das Produkt der Ethoxylierung von Gemischen aus isomeren, verzweigten primären Alkoholen mit 11 Kohlenstoffatomen sind. Solche Gemische sind kommerziell beispielsweise unter der Handelsbezeichnung Exxal® 11 von Exxon Mobil erhältlich. Solche Gemische umfassen zwei oder mehr Verbindungen der Formel (I), in welchen die Gesamtanzahl der Kohlenstoffatome in R⁶ gleich 11 ist, und die sich durch die Bedeutung der Reste R¹, R², R³, R⁴, R⁵ und R⁷ unterscheiden. Die Reste R¹, R², R³, R⁴, R⁵ und R⁷ umfassen dann zusammen 3 Kohlenstoffatome.

In einer weiteren bevorzugten Ausführungsform der Erfindung enthalten die wässrigen Beschichtungszusammensetzungen mindestens eine Verbindung gemäß der Formel (I), worin n für eine Zahl von 3 bis 40, insbesondere 8 bis 30 steht. n stellt den duchschnittlichen Ethoxylierungsgrad dar.

Die Verbindungen der Formel (I) werden als Zusatzstoff zu Beschichtungszusammensetzungen verwendet, wobei diese Beschichtungszusammensetzungen die nach Kenntnis des Fachmanns üblichen Bestandteile aufweisen.

Als übliche Bestandteile wässriger Beschichtungszusammensetzungen sind Folgende zu nennen:
Wässrige Polymerdispersionen, die üblicherweise als Produkt der Emulsionspolymerisation von olefinisch ungesättigter Monomere entstehen. Olefinisch ungesättigte Monomere sind beispielsweise:
- Vinylmonomere, wie Carbonsäureester des Vinylalkohols, beispielsweise Vinylacetat, Vinylpropionat, Vinylether der Isononansäure oder der Isodecansäure, die auch als C₉ und C₁₀-Versaticsäuren bezeichnet werden,
- Arylsubstituierte Olefine, wie Styrol und Stilben,
- olefinisch ungesättigte Carbonsäureester, wie Methylacrylat, Ethylacrylat, Propylacrylat, n-Butylacrylat, i-Butylacrylat, Pentylacrylat, Hexylacrylat, 2-Ethylhexylacrylat, Tridecyacrylat, Stearylacrylat, Hydroxyethylacrylat, Hydroxypropylacrylat sowie die entsprechenden Methacrylsäureester, olefinisch ungesättigte Dicarbonsäureester, wie Dimethylmaleinat, Diethylmaleinat, Dipropylmaleinat, Dibutylmaleinat, Dipentylmaleinat, Dihexylmaleinat und Di-2-ethylhexylmaleinat,
- olefinisch ungesättigte Carbonsäuren und Dicarbonsäuren, wie Acrylsäure, Methacrylsäure, Itaconsäure, Maleinsäure und Fumarsäure und ihre Natrium-, Kalium- und Ammoniumsalze,
- olefinisch ungesättigte Sulfonsäuren und Phosphonsäuren und ihre Alkali- und Ammoniumsalze, wie Vinylsulfonsäure, Vinylphosphonsäure, Acrylamidomethylpropansulfonsäure und ihre Alkali- und Ammonium-, Alkylammonium- und Hydroxyalkylammoniumsalze, Allylsulfonsäure und ihre Alkali- und Ammoniumsalze, Acryloyloxethylphosphonsäure und ihre Ammonium- und Alkalisalze sowie die entsprechenden Methacrylsäurederivate,
- olefinisch ungesättigte Amine, Ammoniumsalze, Nitrile und Amide, wie Dimethylaminoethylacrylat, Acryloyloxethyltrimethylammoniumhalide, Acrylnitril, Acrylamid, Methacrylamid, N-Methylacrylamid, N-Ethylacrylamid, N-Propylacrylamid, N-Methylolacrylamid sowie die entsprechenden Methacrylsäurederivate und Vinylmethylacetamid.

Beschichtungszusammensetzungen enthalten ferner im Allgemeinen Pigmente, wobei mit dem Begriff "Pigmente" sowohl Pigmente, als auch Füllstoffe im weiteren Sinne gemeint sind, und Hilfsstoffe. Hilfsstoffe können unter anderem Netz- und Dispergiermittel, Entschäumer, Biozide, Koaleszensmittel, Alkali sowie RheologieAdditive sein.

Geeignete Pigmente sind feinteilige, organische oder anorganische Weiß- oder Buntpigmente oder ein Gemisch verschiedener solcher Pigmente.

Als beispielhafte Auswahl besonders bevorzugter organischer Pigmente sind dabei Rußpigmente, wie z. B. Gas- oder Furnaceruße; Monoazo- und Disazopigmente, insbesondere die Color Index Pigmente Pigment Yellow 1, Pigment Yellow 3, Pigment Yellow 12, Pigment Yellow 13, Pigment Yellow 14, Pigment Yellow 16, Pigment Yellow 17, Pigment Yellow 73, Pigment Yellow 74, Pigment Yellow 81, Pigment Yellow 83, Pigment Yellow 87, Pigment Yellow 97, Pigment Yellow 111, Pigment Yellow 126, Pigment Yellow 127, Pigment Yellow 128, Pigment Yellow 155, Pigment Yellow 174, Pigment Yellow 176, Pigment Yellow 191, Pigment Yellow 213, Pigment Yellow 214, Pigment Red 38, Pigment Red 144, Pigment Red 214, Pigment Red 242, Pigment Red 262, Pigment Red 266, Pigment Red 269, Pigment Red 274, Pigment Orange 13, Pigment Orange 34 oder Pigment Brown 41; β-Naphthol- und Naphthol AS Pigmente, insbesondere die Colour Index Pigmente Pigment Red 2, Pigment Red 3, Pigment Red 4, Pigment Red 5, Pigment Red 9, Pigment Red 12, Pigment Red 14, Pigment Red 53:1, Pigment Red 112, Pigment Red 146, Pigment Red 147, Pigment Red 170, Pigment Red 184, Pigment Red 187, Pigment Red 188, Pigment Red 210, Pigment Red 247, Pigment Red 253, Pigment Red 254, Pigment Red 256, Pigment Orange 5, Pigment Orange 38 oder Pigment Brown 1; verlackte Azo- und Metallkomplexpigmente, insbesondere die Colour Index Pigmente Pigment Red 48:2, Pigment Red 48:3, Pigment Red 48:4, Pigment Red 57:1, Pigment Red257, Pigment Orange 68 oder Pigment Orange 70; Benzimidazolinpigmente, insbesondere die Colour Index Pigmente Pigment Yellow 120, Pigment Yellow 151, Pigment Yellow 154, Pigment Yellow 175, Pigment Yellow 180, Pigment Yellow 181, Pigment Yellow 194, Pigment Red 175, Pigment Red 176, Pigment Red 185, Pigment Red 208, Pigment Violet 32, Pigment Orange 36, Pigment Orange 62, Pigment Orange 72 oder Pigment Brown 25; Isoindolinon- und Isoindolinpigmente, insbesondere die Colour Index Pigmente Pigment Yellow 139 oder Pigment Yellow 173; Phthalocyaninpigmente, insbesondere die Colour Index Pigmente Pigment Blue 15, Pigment Blue 15:1, Pigment Blue 15:2, Pigment Blue 15:3, Pigment Blue 15:4, Pigment Blue 15:6, Pigment Blue 16, Pigment Green 7 oder Pigment Green 36; Anthanthron-, Anthrachinon-, Chinacridon-, Dioxazin-, Indanthron-, Perylen-, Perinon- und Thioindigopigmente, insbesondere die Colour Index Pigmente Pigment Yellow 196, Pigment Red 122, Pigment Red 149, Pigment Red 168, Pigment Red 177, Pigment Red 179, Pigment Red 181, Pigment Red 207, Pigment Red 209, Pigment Red 263, Pigment Blue 60, Pigment Violet 19, Pigment Violet 23 oder Pigment Orange 43; Triarylcarboniumpigmente, insbesondere die Colour Index Pigmente Pigment Red 169, Pigment Blue 56 oder Pigment Blue 61 zu nennen.

Geeignete anorganische Pigmente sind beispielsweise Titandioxide, Zinksulfide, Zinkoxide, Eisenoxide, Magnetite, Manganeisenoxide, Chromoxide, Ultramarin, Nickel- oder Chromantimontitanoxide, Mangantitanrutile, Cobaltoxide, Mischoxide des Cobalts und Aluminiums, Rutilmischphasenpigmente, Sulfide der seltenen Erden, Spinelle des Cobalts mit Nickel und Zink, Spinelle basierend auf Eisen und Chrom mit Kupfer Zink sowie Mangan, Bismutvanadate sowie Verschnittpigmente, insbesondere werden die Color Index Pigmente Pigment Yellow 184, Pigment Yellow 53, Pigment Yellow 42, Pigment Yellow Brown 24, Pigment Red 101, Pigment Blue 28, Pigment Blue 36, Pigment Green 50, Pigment Green 17, Pigment Black 11, Pigment Black 33 sowie Pigment White 6 verwendet; auch als Füllstoffe bezeichnete Calciumcarbonate wie natürlich vorkommende Kreide und gefälltes Calciumcarbonat, Dolomit, natürliches Siliciumdioxid (Quarzmehl), pyrogene und gefällte Kieselsäuren, Kieselgur, Aluminiumoxide, Aluminiumhydroxide, Talkum, Kaolin, Glimmer (Kalium-AluminiumSilikat-Hydrat), Bariumsulfate wie natürlich vorkommendes Schwerspate und gefälltes Blanc Fix. Bevorzugt werden auch häufig Mischungen anorganischer Pigmente verwendet. Mischungen von organischen mit anorganischen Pigmenten werden ebenfalls häufig verwendet.

Geeignete Netz- und Dispergiermittel sind vorzugsweise Polyacrylatsalze, Acrylat- und MAS-Copolymere, Alkylphenolethoxylate und Alkylphenolethoxylat-Ersatzstoffe, wie Guerbet-Derivate, Fettsauer- und Fettalkoholderivate, insbesondere deren Alkoxylate, sowie EO/PO-Homo- und Blockcopolymere und Polysiloxanether.

Geeignete Entschäumer sind vorzugsweise Mineralölentschäumer und deren Emulsionen, Siliconölentschäumer und Siliconölemulsionen, Polyalkylenglykole, Polyalkylenglykolfettsäureester, Fettsäuren, höherwertige Alkohole, Phosphorsäureester, hydrophob modifizierte Silika, Aluminiumtristearat, Polyethylenwachse und Amidwachse.

Geeignete Biozide zur Verhinderung der unkontrollierten Vermehrung von Bakterien, Algen und Pilzen sind Formaldehyd, Formaldehyd abspaltende Verbindungen, Methylisothiazolinon, Chlormethylisothiazolinon, Benzisothiazolinon, Bronopol, Dibromodicyanonbutan und silberchloridbeschichtetes Titandioxid.

Geeignete Koaleszensmittel sind Ester und Ketone wie Benzoate und Butyrate, sowie Etheralkohole und Glykole. Insbesondere 2,2,4-Trimethyl-pentan-1,3-diol-mono-isobutyrat, Butylglykol, Butyldiglykol, Butyldipropylenglykol, Propylenglykolbutylether und Dipropylenglykolbutylether sind als Koaleszensmittel zu nennen.

Geeignete Alkalien sind Metalihydroxyde ein-, zwei- oder dreiwertiger Metallionen. Bevorzugte Alkalien sind Natronlauge oder Kalilauge sowie deren wässrige Lösungen.

Geeignete Rheologieadditive als Mittel zur Regulierung der Viskosität sind z. B. Stärke- und Cellulosederivate und hydrophobmodifizierte ethoxylierte Urethane(HEUR)-Verdicker, alkaliquellbare Acrylatverdicker, hydrophob modifizierte Acrylatverdicker, Xanthane, Schichtsilikate, Polymere der Acrylamidomethylpropansulfonsäure oder pyrogene Kieselsäure.

Eine Übersicht über gängige Hilfsstoffe geben Wernfried Heilen et at. in "Additive für wässrige Lacksysteme", erschienen bei Vincentz Network, 2009.

In einer erfindungsgemäßen Verwendung als Additive zur Verbesserung der offenen Zeit von wässrigen Beschichtungszusammensetzungen werden die Verbindungen gemäß der Formel (I) in einer Gewichtskonzentration bezogen auf das Gewicht der wässrigen Beschichtungszusammensetzung von 0.1 bis 5 Gew.-%, insbesondere von 0.2 bis 2 Gew.-% eingesetzt. Bezugnahmen auf die wässrige Beschichtungszusammensetzung verstehen sich auf deren Zusammensetzung vor der Auftragung und Trocknung.

### Beispiele

Prozentangaben in dieser Beschreibung sind Gewichtsprozente bezogen auf das Gewicht der Gesamtzusammensetzung, sofern nichts anderes angegeben ist.

In einer Vergleichsreihe wurden von den in Tabelle 1 aufgeführten Additiven 0.5 Gew.-% zu einer wässrigen Farbrezeptur der in Tabelle 2 beschrieben Zusammensetzung zugefügt und hinsichtlich ihrer Wirkung auf die offene Zeit untersucht.

**Tabelle 1: Verwendete Additive**

| Additiv | Beschreibung | Beispielart |
|---|---|---|
| Tristyrylphenolethoxylat (TSPEO) | 2,4,6-Tri-(1-phenylethyl)-phenol Polyglycolether mit n = 10 EO | Vergleichsbeispiel |
| Fettalkoholethoxylat, verzweigt | Ethoxylierungsprodukt von Exxal® 11 mit n = 28 EO | Erfindungsgemäß |

| | | |
|---|---|---|
| Exxal® 11 (Exxon Mobil) ist ein isomeres Gemisch von verzweigten, aliphatischen primären Alkoholen mit 11 Kohlenstoffatomen. | | |

**Tabelle 2: Zusammensetzung der Test-Farbe in Gew.-%**

| Komponente | Rohstoff | Funktion | Gew.-% |
|---|---|---|---|
| 1 | Wasser | Lösemittel | 19.3 |
| 2 | Mowilith LDM 7411 | Bindemittel | 60.0 |
| 3 | Lopon 890 | Dispergiermittel | 0.2 |
| 4 | Ammoniakwasser 10% | Neutralisierungsmittel | 0.3 |
| 5 | Kronos 2190 | Weißpigment | 17.5 |
| 6 | Agitan E256 | Entschäumer | 0.6 |
| 7 | Mowilith LDM 7002 | Bindemittel | 2.0 |
| 8 | Acticide MBS | Konservierungsmittel | 0.1 |

Die Test-Farbe war entsprechende der Tabelle 2 zusammengesetzt und ist frei von organischen Lösungsmitteln und flüchtigen Verbindungen. Zur Herstellung der Farbe wurden die Komponenten 1 - 4 bei Raumtemperatur durch sukzessive Zugabe bei 100 bis 300 U/min mit Hilfe eines Dissolvers der Firma Getzmann mit Sägezahnrührer homogenisiert. Anschließend wurden die Komponenten 5 - 8 bei hoher Scherrate (1000 - 1300 U/min) sukzessive zugegeben und dispergiert bzw. homogenisiert. In der Vergleichsreihe wurden die Additive aus der Tabelle 1 zu der Farbe zugegeben und mit dem Dissolver bei 1000 U/min homogenisiert.

Für die Charakterisierung des Einflusses der zugefügten Additiven auf die offene Zeit der wässrigen Beschichtung wurde folgende rheologische Methode verwendet.

Eine an einem HAAKE MARS III (Thermo Scientific) Rheometer angebrachte Messgeometrie, bestehend aus einem im Durchmesser 35 mm großen Ring, an dem 12 äquidistant verteilte zylindrische Metall-Pins (5 mm lang, 2 mm Durchmesser) senkrecht fixiert sind, wurde in einen auf einer Glasplatte mit einem 400 µm-Rakel nass aufgetragenen Farbfilm bis zu einem Abstand von 100 µm zwischen dem Kopf der Metall-Pins und der Glasplatte eingeführt. Im Anschluss wurde die Messgeometrie bei einer konstanten Umdrehungsgeschwindigkeit von 0,01 U/min durch den trocknenden Film gedreht. Der Anstieg des Drehmoments im Laufe der Messzeit diente als Indikator für die Zunahme der Viskosität im Film und somit für die Trocknung der Beschichtung. Die Auftragung des Drehmoments gegen die Zeit ermöglichte die Feststellung einer kritischen Zeit, an der eine steile Zunahme der Viskosität des Films einsetzte, die der offenen Zeit der Beschichtung entspricht. Die Messungen wurden in einem Klimaraum bei einer Temperatur von 23.0 ± 1.0 °C und einer relativen Feuchtigkeit von 53 ± 4% durchgeführt.

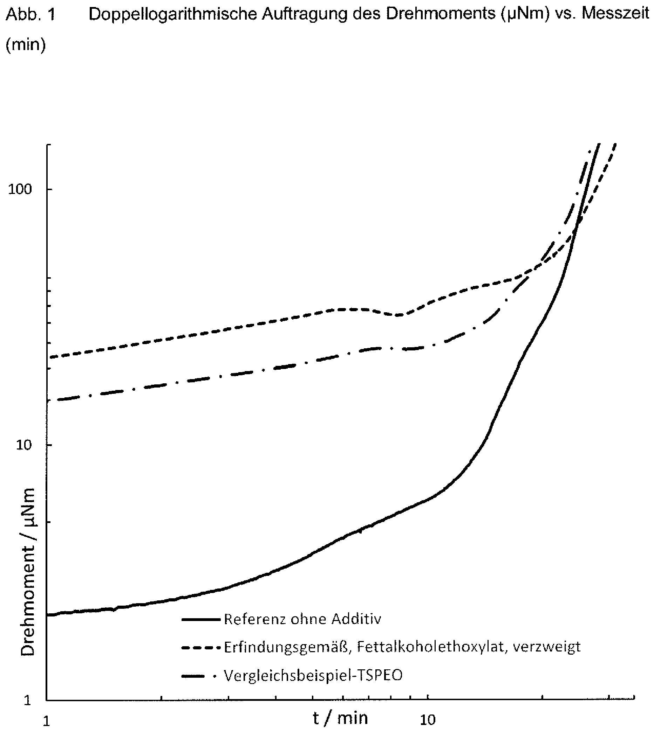

Die quantitative Ermittlung der offenen Zeit erfolgte nach der Tangentenmethode aus einer doppellogarithmischen Darstellung der Messkurve (Abbildung 1). Die ermittelten offenen Zeiten sind in der Tabelle 3 angegeben.

**Tabelle 3**

| Beispiel | Additiv | Offene Zeit [min] |
|---|---|---|
| Referenz | Kein | 12,2 |
| Vergleich (Stand der Technik) | Tristyrylphenolethoxylat (TSPEO) | 13,5 |
| Erfindungsgemäß | Fettalkoholethoxylat, verzweigt | 22,0 |

Abbildung 1 zeigt die Zeit-abhängige Änderung des Drehmoments, welches vom Rheometer während der Rotation der Messgeometrie durch den trocknenden Farbfilm aufgenommen wird. Es können pro Messkurve 2 verschiedene Messbereiche erkannt werden: ein anfänglicher Bereich charakterisiert durch einen langsamen Anstieg des Drehmoments gefolgt von einem zweiten Bereich mit einem steilen Anstieg des Drehmoments bzw. der Viskosität. Der Übergang zwischen den Bereichen definiert das Ende der offenen Zeit der Farbe. Durch die Zugabe des erfindungsgemäßen Additivs kann der steile Anstieg der Viskosität im Vergleich zu den Referenz- (ohne Additiv) und Vergleichsbeispielen (Stand der Technik) verzögert werden bzw. die offene Zeit der Farbe wird durch das erfindungsgemäße Additiv verlängert.

## Patentansprüche

1. Verwendung von mindestens einer Verbindung der Formel (I) 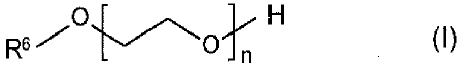 worin
R⁶ für einen C₈- bis C₁₃-Alkylrest, und
n für eine Zahl von 1 bis 50 stehen,
als Additiv zur Verbesserung der offenen Zeit von wässrigen Beschichtungszusammensetzungen.

2. Verwendung nach Anspruch 1, worin R⁶ einem Rest der Formel (II) entspricht 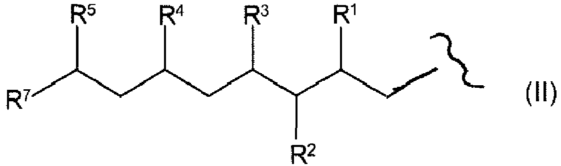 worin
R¹, R², R³, R⁴ und R⁵ unabhängig voneinander für H oder CH₃, und
R⁷ für H, oder einen geradkettigen C₁-C₅-Alkylrest
stehen, mit der Maßgabe, dass die Gesamtzahl der Kohlenstoffatome in R¹, R², R³, R⁴, R⁵ und R⁷ zwischen 0 und 5 liegt.

3. Verwendung nach Anspruch 1 und/oder 2, worin R⁶ 11, 12 oder 13 Kohlenstoffatome umfasst.

4. Verwendung nach Anspruch 3, worin R⁶ 11 Kohlenstoffatome umfasst.

5. Verwendung nach einem oder mehreren der Ansprüche 1 bis 4, worin R⁶ ein verzweigter Alkylrest ist.

6. Verwendung nach einem oder mehreren der Ansprüche 1 bis 5, worin ein Gemisch aus zwei oder mehr Verbindungen der Formel (I) eingesetzt wird, die sich bei gleicher Anzahl von Kohlenstoffatomen in R⁶ durch dessen Struktur unterscheiden.

7. Verwendung nach einem oder mehreren der Ansprüche 1 bis 6, worin n eine Zahl von 3 bis 40 ist.

8. Verwendung nach Anspruch 7, worin n eine Zahl von 8 bis 30 ist.

9. Verwendung nach einem oder mehreren der Ansprüche 1 bis 5, worin die Verbindungen gemäß Formel (I) Produkt der Ethoxylierung von Gemischen aus isomeren, verzweigten primären Alkoholen mit 11 Kohlenstoffatomen sind, welche zwei oder mehr Verbindungen der Formel (I) umfassen, in welchen die Gesamtanzahl der Kohlenstoffatome in R⁶ gleich 11 ist, und die sich durch die Bedeutung der Reste R¹, R², R³, R⁴, R⁵ und R⁷ unterscheiden, wobei die Reste R¹, R², R³, R⁴, R⁵ und R⁷ zusammen 3 Kohlenstoffatome umfassen.

10. Verwendung nach einem oder mehreren der Ansprüche 1 bis 9, worin die Verbindung der Formel (I) in der wässrigen Beschichtungszusammensetzung in einer Menge von 0.1 bis 5 Gew.-%, bezogen auf das Gesamtgewicht der wässrigen Beschichtungszusammensetzung vorhanden ist.

11. Verwendung nach einem oder mehreren der Ansprüche 1 bis 10, worin die wässrige Beschichtungszusammensetzung neben Wasser mindestens eine wässrige Polymerdispersion enthält.

12. Verwendung nach einem oder mehreren der Ansprüche 1 bis 11, worin die wässrige Beschichtungszusammensetzung mindestens ein Pigment enthält.

13. Verwendung nach einem oder mehreren der Ansprüche 1 bis 12, worin die wässrige Beschichtungszusammensetzung mindestens einen Hilfsstoff ausgewählt aus der Gruppe bestehend aus Netzmitteln, Dispergiermitteln, Entschäumern, Bioziden, Koaleszenzmitteln, Alkalien und Rheologie-Additiven enthält.

14. Verfahren zur Verlängerung der offenen Zeit von wässrigen Beschichtungszusammensetzungen, indem der wässrigen Beschichtungszusammensetzung vor dem Auftragen auf ein zu beschichtendes Substrat mindestens eine Verbindung der Formel (I) zugesetzt wird. 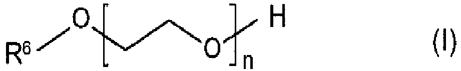 worin
R⁶ für einen C₈- bis C₁₃-Alkylrest, und
n für eine Zahl von 1 bis 50 stehen.
